# EUROPEAN PATENT SPECIFICATION

(11) **EP 2 704 053 B1**
(45) Date of publication and mention of the grant of the patent: **21.09.2016**
(21) Application number: 12006082.7
(22) Date of filing: 27.08.2012
(51) Int. Cl.: G06F 21/57, G06F 9/445

(54) **Method and system for updating a firmware of a security module**
Verfahren und System zur Aktualisierung einer Firmware eines Sicherheitsmoduls
Procédé et système de mise à jour d'un micrologiciel d'un module de sécurité

(43) Date of publication of application: 05.03.2014
(73) Proprietor: Giesecke & Devrient GmbH, 81677 München (DE)
(72) Inventor: Weiß, Dieter, 81825 München (DE); Vedder, Klaus, 85402 Kranzberg (DE); Meyer, Michael, 84427 Sankt Wolfgang (DE); Tagscherer, Michael, 81929 München (DE); Rudolph, Jens, 80639 München (DE); Dietz, Ulrich, 81669 München (DE); Nyholm, Jari, San Jose CA 95134 (US); Larsson, Thomas, 125 56 Älvsjö (SE); Hult, Jorgen, 146 40 Tullinge (SE)

(56) References cited:
- EP-A2- 2 378 414
- US-A1- 2009 064 125
- Shade L: "Implementing Secure Remote Firmware Updates", Internet citation, May 2011 (2011-05), pages 1-18, XP002710437, Retrieved from the Internet: URL:http://www.allegrosoft.com/wp-content/ uploads/Secure-Firmware-Updates-Paper.pdf [retrieved on 2013-08-06]
- NILSSON D K ET AL: "Secure Firmware Updates over the Air in Intelligent Vehicles", COMMUNICATIONS WORKSHOPS, 2008. ICC WORKSHOPS '08. IEEE INTERNATIONAL CONFERENCE ON, IEEE, PISCATAWAY, NJ, USA, 19 May 2008 (2008-05-19), pages 380-384, XP031265266, ISBN: 978-1-4244-2052-0

## Description

The invention relates to mobile communications in general and in particular to a method and a system for updating a firmware of a security module.

Security modules comprises system resources, particularly data interfaces for data input and output data, one or more central processing units CPU, volatile memory as RAM and non-volatile memory areas in particular, ROM EEPROM or FLASH. Applications and Files on the security module need to access those system resources during their execution. These system resources are managed by the firmware. The firmware therefore is an interface between applications of the security module and the system resources of the security module.

In case errors are discovered in the firmware or it is determined that a specific functionality in the firmware is not included, for example, a function, a method, or a program code library, those parts of the firmware are post loaded and installed in the field. This method is well known and called patching. Patching, i.e. the partial exchange of the firmware, may be realized by a complete writing of the patch into a memory of the security module for installation purposes. This procedure needs a corresponding amount of memory in the security module which typically is not available due to cost reasons. Therefore patching is expensive and leads to correction and expansion of small parts of the firmware only.

From time to time a newer version of the firmware is developed. Currently, a complete exchange of the firmware of a security module is not foreseen. However, due to the fact that security modules have a long lifetime and there is a continuous technical development in their technical environment, there is a need to keep the firmware of a security module up to date. One reason for this necessity is that applications contained in the security module have to have reliable security mechanisms with regard to attacks or encryption algorithms of the security module over its lifetime.

From DE 103 36 568 A1 it is known to provide an operating system for a security module that contains a primary operating system for operating the security module under normal conditions. Furthermore, in the operating system an emergency service is provided with which the security module can be operated in lieu of the primary operating system.

DE 10 2004 013 904 A1 discloses a system comprising an end terminal with a medium for transmitting program codes to a mobile security module, and an interface receiving the transmitted codes. The terminal has a verifier to verify the codes which provide verified program codes to the carrier. The terminal has a processing unit, where the unit and the verifier are designed such that the codes are loaded to the carrier only after verification.

The disclosure US-A-2009/064125 discloses a method of updating a firmware of a security module in an equipment comprising a device and the security module which are arranged such that data can be exchanged between the security module and the device, comprising the steps:
- transferring the firmware update from a provider to the equipment and storing the firmware update in a memory of the device, and unpacking the firmware by a boot loader of the equipment, i.e by an activation module for operating the memory update when all the update blocks have been received and verified.

It is the object of the present invention to provide a method and a system for updating a firmware of a security module which enables a complete or partial exchange of the firmware which requires a storage footprint as small as possible.

These objects are solved by a method according to the features of claim 1 and a system according to the features of claim 13 Preferred embodiments are set out in the dependent claims.

According to the invention, a method for updating a firmware of a security module in an equipment is provided. The equipment comprises a device and the security module. The device and the security module are arranged such that data can be exchanged between the security module and the device. The method comprises the steps of:
a) Receiving a first message by the security module, wherein the first message indicates the availability of a firmware update provided by a provider and wherein the first message contains a transaction number which is individual for the security module;
b) Transferring a second message from the equipment to the provider with which the firmware update is requested from the provider, wherein the second message contains the individual transaction number to enable the provider to conduct an identification of the security module;
c) Transferring the firmware update from the provider to the equipment based on an evaluation of the individual transaction number and storing the firmware update in a memory of the device
d) Unpacking the firmware by a boot loader of the equipment or the security module.

According to the invention the security module is a module reduced in size and resources comprising a central processing unit, at least one data interface for communication with the device and a storage area. This storage area might comprise secret data. The security module obtains features to prohibit manipulation and/ or abuse attempts to read out the secret data. The secret data in the security module are for identification and / or authentication of a user at the device, a terminal or a network system.

The security module is for example a smart card, such as a UICC, a SIM, U-SIM, R-UIM or ISIM-card, an electronic identity document such as eID or ePassport, an electronic driver's license, electronic vehicle registration or a payment card, such as a credit or debit card.

In particular, the security module is a subscriber identity module for authentication / identification of a subscriber in a mobile radio network environment. Such subscriber identity modules are operated using a card reader units in a terminal and can be removed in principle from the terminal to be either exchanged for other smart cards or operated in a different terminal. Alternatively, the security module is an integral part within a terminal such as a hard-wired electronic module. Such security modules are also embedded as UICC, eUICC, or embedded secure element, ESE refers. In this configuration, these modules are not provided for security of supply from the terminal and can not in principle be easily replaced.

Alternatively, the security module is a machine-to-machine module. These modules are used for remote monitoring, control and maintenance of devices or equipment such as machinery, equipment and systems. Alternatively those modules are used for counting units such as electric meters, water meters, so-called smart meters.

Alternatively, the security module as a software component in a trusted part of an operating system, called a Trusted Execution Environment (TEE) of a device. The security module is then designed, for example within a secure runtime environment.

The security module is operable by means of the device. The device according to the present invention comprises means for communicating with a communication network, in order to receive the firmware update. The device might be a mobile device, like a smart phone, a tablet PC, a notebook, a PDA. Alternatively the device is a multimedia device such as digital picture frame, audio equipment, a TV, a set top box, e-book reader and so on. By way of example, the term device also includes any kind of machinery, like automats, vehicles, smart-meters and so on. The firmware update is in particular received via an air interface, such as OTA, which is an SMS based communication over cellular signalling layers or GPRS layers. Alternatively, the firmware update is received via an internet protocol based channel, such as OTI (e.g. WLAN). Alternatively, the firmware update is received via a packed switched domain, e.g. an LTE based channel.

The term firmware is here equated with the term operating system, since per definition a firmware is a proprietary operating system. The firmware might be designed in accordance with ISO / IEC 7816-4, ETSI TS 102 221, ETSI TS 101 220, ETSI TS 102 241 and ETSI TS 102 226. The firmware manages the data processing and data transfer between system resources of the security module. The firmware manages the data processing and data transmission from the security module to/from an external unit. The firmware manages the control flow of instruction commands. The firmware manages the physical memory addresses of the storage area. The firmware manages the execution of the applications and file systems, running on the security module. The firmware therefore comprises an I / O Manager, command interpreter, a return code manager, a firmware kernel, a resource manager and/or an instruction set. For more information about a firmware of a security module can be obtained in chapter 13 of the "Smart Card Handbook" by authors Wolfgang Effing and Wolfgang Rankl in the Fifth Edition published by Hanser Verlag.

The update of the firmware leads to another version of the actual firmware with an alternative development stage with additional and/or improved functionality. Alternatively and / or additionally, the firmware update is another variant of the actual firmware providing an alternate functionality. In the present description, updating the firmware of a security module comprises both a complete exchange of the firmware and a partial exchange of the firmware which may be an update of the actual firmware of the security module.

The method enables an easy and cheap update of a firmware of a security module by ensuring a minimal storage footprint. In particular, the method is suitable for such security modules which are embedded in the device.

Updating of the firmware of the security module may be realized by omitting asymmetric encryption methods. Hence, the method suggested only needs small resources with regard to the security module and the device.

The embodiment of the invention is particular in that the first message further comprises a first unlock secret and after the step c) the method further comprises the steps:
d) Transferring a second unlock secret from the provider to the equipment;
e) Verifying whether the second unlock secret corresponds to the first unlock secret by the equipment; and
f) Unpacking the firmware by the boot loader of the equipment or the security module in case that the verification results in a corresponding unlock.

This embodiment leads to a higher level of security and to a higher level of trust between the security module and the provider.

According to a preferred embodiment unpacking the firmware update comprises transferring of those data from the device to the security module which is processed directly by the boot loader. This embodiment ensures that not the complete update of the firmware has to be stored on a memory of the security module before decrypting and loading it into the security module. This results in smaller needed resources.

According to a further embodiment, unpacking of the firmware update comprises a decryption of data received from the device by the security module.

According to a further preferred embodiment, the boot loader creates a backup of the actual firmware before starting unpacking of the firmware update. Creating a backup preferably comprises an encryption with a key before transferring the backup to the device for storing. The key used for encrypting the backup of the firmware may be a random key. The precausional storing of the actual firmware as backup represents a kind of firmware-update which will be handled as mentioned above in case that the update of the available firmware fails due to any reason. Re-installing of the stored actual backup may be executed via the boot loader.

According to a further preferred embodiment, the boot loader checks the success of updating the firmware by calculating a checksum of the unpacked firmware and comparing the calculated checksum with the received checksum. The received checksum may be provided in step c) in which the firmware update is transferred from the provider to the equipment.

According to a further preferred embodiment, the first message comprises an information about a version and/or a type of the available firmware update which is compared by the equipment, in particular the security module, with stored information about a version and/or type of its actual firmware to check whether a firmware update is necessary or not. This step ensures that unnecessary updates will be avoided. A firmware update may be unnecessary in case that the firmware update has been brought into the security module on a different way, i.e. not via the provider. In case that the equipment is part of an M2M (Machine-to-Machine) environment, such an update may be brought to the security module within an inspection or repair of a component to which the equipment is attached to.

According to a further preferred embodiment, the unlock secret is stored within the security module only in case a firmware update is necessary. This embodiment helps to improve the memory resources.

According to a further preferred embodiment, the first message is transferred by a subscription manager of the provider due to the reception of a release message from a security module vendor of the provider wherein the release message contains the firmware update and information about a version and/or a type of the available firmware update. The information about the version and/ or type of the available firmware update enables the equipment to verify whether the firmware update is necessary or not. For example, by processing the type of the available firmware update it can be checked whether the available firmware is suitable for the security module or not. Processing the version of the available firmware update clarifies whether a release number of the available firmware is higher than the release number of the actual firmware.

It is further preferred that the subscription manager requests the release message from the security module vendor. This is a so-called pull mechanism from the subscription manager to obtain information about a newer release from the firmware on a predefined time schedule. Alternatively the security module vendor provides the subscription manager automatically with the release message using a predefined time schedule.

It is further preferred that there are more than one subscription manager in the communication system. Therefore the security module vendor cell-broadcasts a release message to the subscription managers known to the vendor, wherein the release message contains information about the newer version and/or type of available firmware update. The specific subscription manager assures the actuality and refreshing of the communication link to the appropriate vendor. Alternatively each subscription manager requests the release message.

It is further preferred that at least the firmware update of the release message is encrypted with a first key wherein the first key is specific according to a type of the security module and known to the security module of the equipment and the security module vendor. Since this first key is not known to the device of the equipment and the subscription manager of the provider, a temporarily storage of the firmware update both in the subscription manager and the device is possible without a security risk. If the device malfunctions during the firmware download it is possible to obtain the firmware update/ download again without a security risk.

It is further preferred that the release message contains a checksum being encrypted with the first key. The firmware update and, optionally, the checksum may be stored by the subscription manager for the transfer of the firmware update in step c).

In contrast to the release message, the first message is encrypted with a second key which is known to the security module of the equipment and the subscription manager. This enables a secure communication between the subscription manager and the equipment for initializing and handling the firmware update.

The second message may be triggered by the security module and the second message is transferred from the device to the provider. Preferably, the second message is encrypted with the second key. Hence, the device is not able to "read" the second message. Instead, the device is just a forwarder of the second message.

According to a further preferred embodiment, the second unlock secret is transferred from the provider to the equipment after the complete transfer of the firmware update. This prevents that the device deletes the actual firmware on the security module due to a failure before the total firmware update is stored on the device.

According to a further preferred embodiment, the second unlock secret may be encrypted with the first key. As an advantage, only the security module is able to decrypt the unlock secret which is used to delete the actual firmware from the security module.

The equipment and the provider are communicating over a communications network. In particular the communication comprises the receiving of the first message, the transfer of the second message, the transfer of the firmware and all other date exchange between the equipment and the provider. In the present invention the term communications network is equal to the term communication system and is defined by a transmission of electrical signals between both instances. In particular, for obtaining services - such as speech or data transmission services - from the communications system the equipment has to identify and/ or authenticate itself on the network. In particular, this invention belongs to the field of wireless communication networks such as the "Global System for Mobile Communications," GSM, representing the second generation or the "General Packet Radio Service", GPRS or "Universal Mobile Telecommunications System," UMTS represents the third generation or "Long term Evolution", LTE, representing the fourth generation of cellular based mobile networks as well as other cellular communications systems using Code Division Multiple Access, CDMA or Customised Applications for Mobile network Enhanced Logic, CAMEL.

The invention will be explained in more detail by an explanation of an embodiment set out in the accompanying figures.
- Fig. 1: shows a data structure of a security module.
- Fig. 2: shows a principle procedure of a firmware update of the security module.
- Fig. 3: shows a flowchart illustrating the update process of the firmware of the security module.

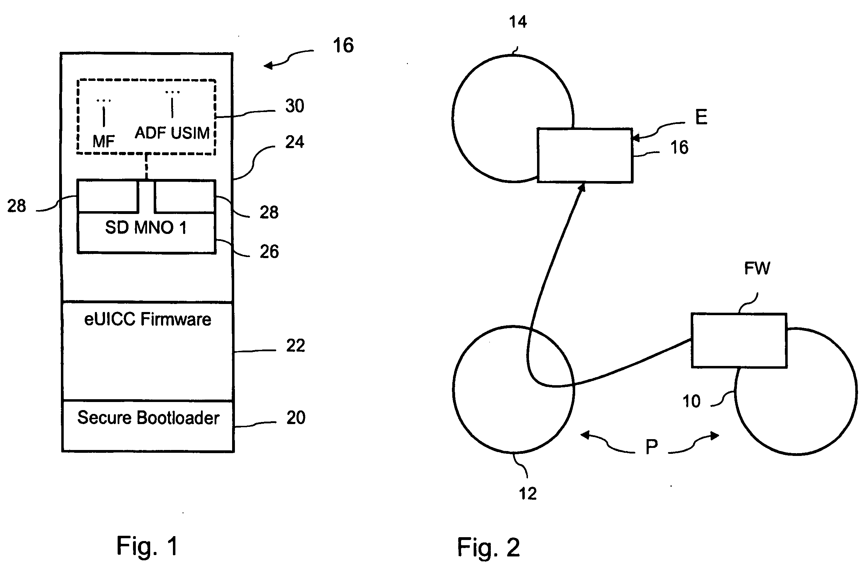

Fig. 1 illustrates a data structure of a security module, such as an UICC or an embedded UICC (eUICC). The security module 16 comprises a secure boot loader 20 which may be used within a secure environment, such as an eUICC vendor, or within a device, such as a mobile phone. The secure boot loader 20 enables replacement of an actual firmware 22 of the security module 16. However, replacement only can be made with a firmware of the vendor of the security module 16 via a trustful subscription manager.

The firmware 22 of the security module provides basic functionalities for applications 28 within the security module 16. These applications may comprise program libraries, encryption and hash algorithms, file and memory administration as well as applications provided from third parties. Furthermore, the firmware provides functionalities for the device in which the security module is integrated. Such functionality could be an authentication of the device within a network. The applications are stored in so-called security domains 26 of mobile network operators (MNO). The applications 28 access the file system 30 of the security module 16 which, for example, are integrated in a device 14.

Fig. 2 illustrates the procedure of an update of the firmware of a security module as illustrated in Fig. 1. A producer of the security module, called a vendor 10, provides a subscription manager 12 an available firmware FW update. Vendor 10 and subscription manager 12 constitute a provider P of firmware and security module, respectively. The subscription manager 12 provides the new firmware update to all relevant security modules 16. Provision of the new firmware update typically can be made over the air (OTA) or via a TCP/IP (Transport Control Protocol/Internet Protocol) communication line.

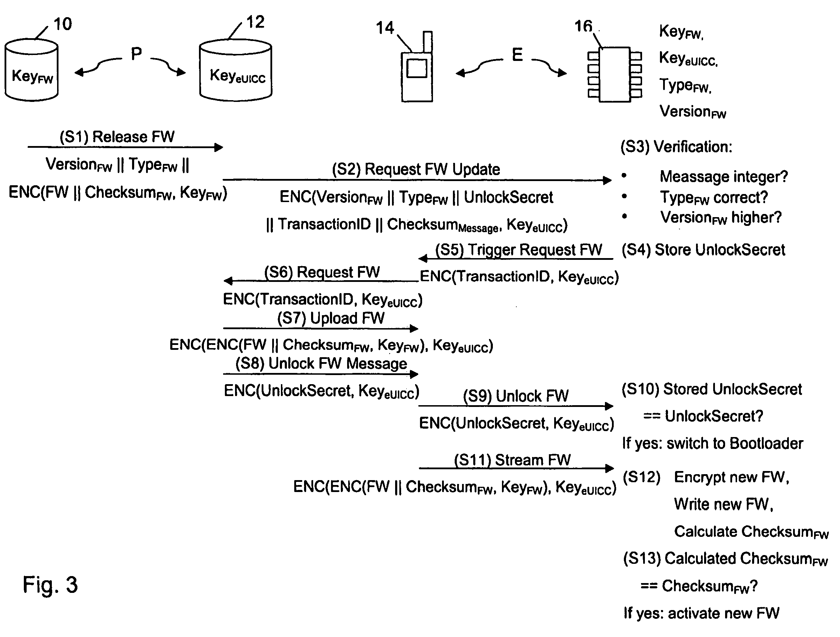

Fig. 3 illustrates a flow chart of the suggested method for updating the firmware of the security module 16.

A communication takes place between the security module vendor 10, the subscription manager 12, the device 14 and the security module 16. The vendor 10 and subscription manager 12 are part of the provider P. The device 14 which contains the security module 16 such that data can be exchanged between these two components, constitute an equipment or end terminal E.

The communication described below is secured via different security mechanisms. For this reason, the vendor 10 and the security module 16 comprise a first key Key_{FW}. Furthermore, the subscription manager and the security module 16 comprise a second key Key_{eUICC}. Furthermore, the security module 16 has an information about the type (Type_{FW}) and version (Version_{FW}) of the actual firmware, i.e. the operating system which is currently running on the security module 16.

In the flowchart of Fig. 3, ENC(× ∥y, Key) indicates that "x" and "y" are encrypted with the key "Key". "x" and "y" thereby represent by way of example two encrypted information pieces wherein the number of encrypted information pieces may be arbitrary. "Key" represents the first or the second key Key_{FW} or Key_{eUICC}. The abbreviation "FW" stands for firmware.

In a first step S1, a release message "Release FW" is transferred from the vendor 10 to the subscription manager 12. By transferring the release message, the vendor 10 provides the subscription manager 12 with the information about a new available firmware. The firmware FW is encrypted with the first key Key_{FW} which is not known to the subscription manager 12. The first key Key_{FW} typically is specific for a type of security module. The release message furthermore contains a checksum of the available firmware update ("Checksum_{FW}") which is encrypted with the first key Key_{FW}, too. An information about the version "Version_{FW}"and a type "Fype_{FW}" which is also part of the release message is not encrypted and therefore accessible by the subscription manager 12.

After having received the release message, the subscription manager 12 identifies by processing type and version of the available new firmware FW in a database those security modules which can take advantage of the available firmware update. Those security modules 16 (in Fig. 3 by way of example only one security module 16 is illustrated) receive in step S2 a request (which corresponds to the aforementioned first message) and which is denoted with "Request FW Update". This message, whose content is encrypted with the second key Key_{eUICC}, contains the version and type of the firmware FW, an unlock secret, a transaction ID and a checksum of the encrypted message. The parameter "UnlockSecret" is a random bit combination of arbitrary length which will later on be used to delete the actual firmware from the security module 16. The parameter "TransactionID" contains an unique identifier for each requested security module. This information will be used to identify which security module has answered to the request. The parameter "TransactionID" is a long, unique random number. The parameter "Checksum_{message}" is an additional checksum of the encrypted message of step S2 to prohibit attacks by using random bit patterns.

In step S3 a verification is made by the security module 16. Within this verification it is checked whether the requested message of step S2 is integer, i.e. unamended and authentic. Afterwards, the security module compares version and type of the available firmware update with the corresponding information stored within the security module 16. This comparison helps to avoid unnecessary updates. The comparison comprises the steps of checking whether the type is correct and checking the version number.

In case that the offered available firmware update is already stored on and used by the security module, the method is aborted. However, even in this case it is preferred that the security module transfers a message to the subscription manager, preferably together with the actual type and version of the actual firmware stored on the security module. This helps the subscription manager to keep the information about what firmware is on what security module updated.

In case that the offered available firmware update is necessary, in step S4 the unlock secret is stored within a memory of the security module 16.

In step S5 a security module 16 triggers the device 14 with a message "Trigger Request FW" to initiate a download of the available firmware. The trigger message may be in the form of a proactive command. The trigger message at least comprises the transaction ID which is encrypted with the second key Key_{eUICC}. The transaction identification serves as a credential of the device to be allowed to download the firmware update. Furthermore, the transaction identifier is used for a mapping, on which request the device 14 answers. In case that the device 14 does not know an address of the subscription manager, the trigger message furthermore comprises an address of a server of the subscription manager which provides the firmware update.

In step S6 the request message is forwarded from the device 14 to the subscription manager 12.

Afterwards, the subscription manager 12 checks by processing the received transaction identification (transactionID) whether the request is valid. In case the request is valid, the firmware update which correlates to the transaction identification will be uploaded to the device or downloaded by the device 14 from the subscription manager 12.

Due to the fact that the firmware update is encrypted with the first key Key_{FW} no additional security measures are necessary. This is of advantage in the environment of M2M which enables cheaper devices. However, if the firmware update is to be secured additionally, with https a mutual authentication may be used.

In step S8 an unlock message ("unlock FW message") will be transferred from the subscription manager 12 to the device 14. The unlock message comprises the unlock secret, encrypted with the second key Key_{eUICC}. It is to be noted that the unlock secret which is transferred in step S8 will be received by the device. In contrast, the unlock secret of step S2 has been transferred from the subscription manager 12 directly to the security module 16.

Furthermore, it is to be noted that the unlock secret will be transferred to the device 14 in step S8 after the transfer of the firmware update to the device has been completed. Since the unlock secret is used to delete the actual firmware from the security module, this measure prohibits that a device deletes the actual firmware from the security module due to a failure before the available firmware update is available in a memory of the device.

As a further option between step S7 and step S8 the device may transfer a checksum over the received data to the subscription manager. With this checksum the subscription manager 12 would be able to verify whether the firmware update data has been transferred without any failure to the device.

In step S9, the device transfers the unlock secret to the security module 16. In step S10, the security module 16 verifies whether the stored unlock secret (received in step S2) corresponds to the unlock secret of the unlock message. If such a correspondence is given, the security module switches to a boot loader of the security module for receiving the firmware update.

In step S11, the data of the firmware update will be transferred without any change from the device 14 to the security module 16. It is to be noted that only those data will be transferred which will be written by the secure boot loader in a non-volatile memory of the security module. This procedure is called streaming.

In step S12 which will be processed more or less in parallel to step S11, the security module 16 receives the data transferred from the device and encrypts them blockwise. Optionally, the encrypted data will be unpacked. Preferably, compression methods like Byterun or LZW will be used. The security module 16 writes the received data of the firmware in its non-volatile memory. As a result, memory used for temporarily storing is low.

In an option, the secure boot loader may create a protocol containing already written parts of the data/blocks. This enables to restart the writing of the data in case of an interruption of data transfer, for example in case of a power-off.

As soon as the new firmware has been written into the memory of the security module 16 the secure boot loader calculates a checksum of the written data. Alternative, an additional checksum may be calculated based on the unpacked data. The latter enables a differentiation to the wrongly received data (second checksum) and wrongly data (original checksum). This is of importance for an automatic error treatment and error deletion.

In the last step S13, the security module 16 compares the calculated checksum with the received checksum from step S2. In case of a correspondence, the boot loader switches back to the new firmware. Last, the version information of the new firmware will be set to a new value.

In a further embodiment the secure boot loader encrypts the actual firmware with a random key and afterwards with the second key Key_{eUICC} and transfers the result to the device for storing. This has to be done before step S1The stored information is a correct firmware-update which may be used again in case of an error in one of the steps S12 and S13. This enables to revert the firmware update in case of a failure. Furthermore, this improves failure safety of the security module.

### Reference Signs

- 10: security module vendor
- 12: subscription manager
- 14: device
- 16: security module
- 18: user
- 20: secure boot loader
- 22: firmware
- 24: profile
- 26: security domain
- 28: application
- 30: file system
- FW: firmware
- E: equipment
- P: provider
- Key_{FW}: first key
- Key_{eUICC}: second key

## Claims

1. A method for updating a firmware of a security module (16) in an equipment (E) comprising a device (14) and the security module (16) which are arranged such that data can be exchanged between the security module (16) and the device (14), comprising the steps:
- Receiving a first message by the security module (16), wherein the first message indicates the availability of a firmware update provided by a provider (P) and wherein the first message contains a transaction number which is individual for the security module (16) and a first unlock secret;
- Transferring a second message from the equipment (E) to the provider (P) with which the firmware update is requested from the provider (P), wherein the second message contains the individual transaction number to enable the provider (P) to conduct an identification of the security module (16);
- Transferring the firmware update from the provider (P) to the equipment (E) based on an evaluation of the individual transaction number and storing the firmware update in a memory of the device (14);
- After the transfer of the firmware update to the equipment has been completed, transferring a second unlock secret from the provider (P) to the equipment (E);
- Verifying whether the second unlock secret corresponds to the first unlock secret by the equipment (E); and
- Unpacking the firmware update by a boot loader of the equipment (E) or the security module (16) in case that the verification of the second unlock secret is positive.

2. The method according to claim 1, wherein unpacking the firmware update comprises transferring of those data from the device (14) to the security module (16) which are processed directly by the boot loader.

3. The method according to one of the preceding claims, wherein unpacking of the firmware update comprises a decryption of data received from the device (14) by the security module (16).

4. The method according to one of the preceding claims, wherein the boot loader creates a backup of the actual firmware before starting unpacking of the firmware update.

5. The method according to one of the preceding claims, wherein the boot loader checks the success of updating the firmware by calculating a checksum of the unpacked firmware update and comparing the calculated checksum with a received checksum.

6. The method according to one of the preceding claims, wherein the unlock secret is stored within the security module (16) only in case a firmware update is necessary.

7. The method according to one of the preceding claims, wherein the first message is transferred by a subscription manager of the provider (P) due to the reception of a release message from a security module vendor (10) of the provider (P) wherein the release message contains the firmware update and an information about a version and/or a type of the available firmware update.

8. The method according to claim 7, wherein at least the firmware update of the release message is encrypted with a first key (Key_{FW}), wherein the first key (Key_{FW}) is specific according to a type of the security module (16) and known to the security module (16) of the equipment (E) and the security module vendor (10).

9. The method according to claim 8, wherein the release message contains a checksum being encrypted with the first key (Key_{FW}).

10. The method according to one of the preceding claims, wherein the first message is encrypted with a second key (Key_{eUICC}), which is known to the security module (16) of the equipment (E) and the subscription manager.

11. The method according to one of the preceding claims, wherein the second message is triggered by the security module (16) and the second message is transferred from the device (14) to the provider (P).

12. The method according to claim 10 or 11, wherein the second message is encrypted with the second key (Key_{eUICC}).

13. A system for updating a firmware of a security module (16) in an equipment (E) comprising a device (14) and the security module (16) which are arranged such that data can be exchanged between the security module (16) and the device (14), the system being adapted to:
- receive a first message by the security module (16), wherein the first message indicates the availability of a firmware update provided by a provider (P) and wherein the first message contains a transaction number which is individual for the security module (16) and a first unlock secret;
- transfer a second message from the equipment (E) to the provider (P) with which the firmware update is requested from the provider (P), wherein the second message contains the individual transaction number to enable the provider (P) to conduct an identification of the security module (16);
- transfer the firmware update from the provider (P) to the equipment (E) based on an evaluation of the individual transaction number and storing the firmware update in a memory of the device (14);
- After the transfer of the firmware update to the equipment has been completed, transfer a second unlock secret from the provider (P) to the equipment (E);
- verify whether the second unlock secret corresponds to the first unlock secret;
- unpack the firmware update by a boot loader of the equipment (E) or the security module (16) in case that the verification of the second unlock secret is positive.

## Patentansprüche

1. Verfahren zum Aktualisieren einer Firmware eines Sicherheitsmoduls (16) in einem Zubehör (E) umfassend ein Endgerät (14) und ein Sicherheitsmodul (16), die derart eingerichtet sind, dass Daten zwischen dem Sicherheitsmodul (16) und dem Endgerät (14) ausgetauscht werden können, aufweisend die Schritte:
- Empfangen einer ersten Nachricht durch das Sicherheitsmodul (16), wobei die erste Nachricht die Verfügbarkeit einer Firmwareaktualisierung anzeigt, welche durch einen Anbieter (P) angeboten wird, und wobei die erste Nachricht eine Transaktionsnummer beinhaltet, die bezüglich dem Sicherheitsmodul (16) individuell ist und ein erstes Entsperrungsgeheimnis beinhaltet;
- Übertragen einer zweiten Nachricht von dem Zubehör (E) an den Anbieter (P) mit der die Firmwareaktualisierung vom Anbieter (P) angefragt wird, wobei die zweite Nachricht die individuelle Transaktionsnummer aufweist, um dem Anbieter (P) zu ermöglichen, eine Identifikation des Sicherheitsmoduls (16) durchzuführen;
- Übertragen der Firmwareaktualisierung von dem Anbieter (P) an das Zubehör (E) basierend auf einer Evaluation der individuellen Transaktionsnummer und Speichern der Firmwareaktualisierung in einem Speicher des Endgeräts (14);
- Übertragen eines zweiten Entsperrgeheimnisses von dem Anbieter (P) an das Zubehör (E), nachdem das Übertragen der Firmwareaktualisierung an das Zubehör vollständig ist;
- Verifizieren, ob das zweite Entsperrgeheimnis mit dem ersten Entsperrgeheimnis des Zubehörs (E) korrespondiert; und
- Entpacken der Firmwareaktualisierung mittels eines Boot Loaders des Zubehörs (E) oder des Sicherheitsmoduls (16) in dem Fall, dass die Verifikation des zweiten Entsperrgeheimnisses positiv ist.

2. Verfahren nach Anspruch 1, wobei das Entpacken der Firmwareaktualisierung ein Übermitteln von denjenigen Daten von dem Endgerät (14) an das Sicherheitsmodul (16) umfasst, welche direkt von dem Boot Loader bearbeitet werden.

3. Verfahren nach einem der vorhergehenden Ansprüche, wobei das Entpacken der Firmwareaktualisierung ein Entschlüsseln von Daten, empfangen von dem Endgerät (14) durch das Sicherheitsmodul (16), umfasst.

4. Verfahren nach einem der vorhergehenden Ansprüche, wobei der Boot Loader eine Sicherheitskopie der aktuellen Firmware erstellt, bevor er das Entpacken der Firmwareaktualisierung startet.

5. Verfahren nach einem der vorhergehenden Ansprüche, wobei der Boot Loader den Erfolg des Aktualisierens der Firmware mittels Berechnens einer Prüfsumme der entpackten Firmwareaktualisierung und Vergleichens der berechneten Prüfsumme mit einer empfangenen Prüfsumme überprüft.

6. Verfahren nach einem der vorhergehenden Ansprüche, wobei das Entsperrgeheimnis in dem Sicherheitsmodul (16) nur in dem Fall gespeichert wird, in dem eine Firmwareaktualisierung notwendig ist.

7. Verfahren nach einem der vorhergehenden Ansprüche, wobei die erste Nachricht von einem Subscription Manager des Anbieters (P) aufgrund des Empfangens einer Freigabenachricht von einem Sicherheitsmodulanbieter (10) des Anbieters (P) übertragen wird, wobei die Freigabenachricht die Firmwareaktualisierung beinhaltet und eine Information über eine Version und/oder einen Typ der vorhandenen Firmwareaktualisierung.

8. Verfahren nach Anspruch 7, wobei wenigstens die Firmwareaktualisierung der Freigabenachricht mit einem ersten Schlüssel (Key_{FW}) verschlüsselt ist, wobei der erste Schlüssel (Key_{FW}) spezifisch bezüglich eines Typs des Sicherheitsmoduls (16) ist und dem Sicherheitsmodul (16) des Zubehörs und dem Sicherheitsmodulanbieter (10) bekannt ist.

9. Verfahren nach Anspruch 8, wobei die Freigabenachricht eine Prüfsumme aufweist, die mit dem ersten Schlüssel (Key_{FW}) verschlüsselt ist.

10. Verfahren nach einem der vorhergehenden Ansprüche, wobei die erste Nachricht mit einem zweiten Schlüssel (Key_{eUICC}) verschlüsselt ist, welcher dem Sicherheitsmodul (16) des Zubehörs (E) und dem Subscription Manager bekannt ist.

11. Verfahren nach einem der vorhergehenden Ansprüche, wobei die zweite Nachricht durch das Sicherheitsmodul (16) ausgelöst wird und die zweite Nachricht von dem Endgerät (14) an den Anbieter (P) übermittelt wird.

12. Verfahren nach einem der Ansprüche 10 oder 11, wobei die zweite Nachricht mit dem zweiten Schlüssel (Key_{eUICC}) verschlüsselt ist.

13. System zum Aktualisieren einer Firmware eines Sicherheitsmoduls (16) in einem Zubehör (E) umfassend ein Endgerät (14) und das Sicherheitsmodul (16), welche derart eingerichtet sind, dass Daten zwischen dem Sicherheitsmodul (16) und dem Endgerät (14) ausgetauscht werden können, wobei das System eingerichtet ist zum:
- Empfangen einer ersten Nachricht durch das Sicherheitsmodul (16), wobei die erste Nachricht die Verfügbarkeit einer Firmwareaktualisierung anzeigt, welche durch einen Anbieter (P) angeboten wird, und wobei die erste Nachricht eine Transaktionsnummer beinhaltet, die bezüglich dem Sicherheitsmodul (16) individuell ist und ein erstes Entsperrungsgeheimnis beinhaltet;
- Übertragen einer zweiten Nachricht von dem Zubehör (E) an den Anbieter (P) mit der die Firmwareaktualisierung vom Anbieter (P) angefragt wird, wobei die zweite Nachricht die individuelle Transaktionsnummer aufweist, um dem Anbieter (P) zu ermöglichen, eine Identifikation des Sicherheitsmoduls (16) durchzuführen;
- Übertragen der Firmwareaktualisierung von dem Anbieter (P) an das Zubehör (E) basierend auf einer Evaluation der individuellen Transaktionsnummer und Speichern der Firmwareaktualisierung in einem Speicher des Endgeräts (14);
- Übertragen eines zweiten Entsperrgeheimnisses von dem Anbieter (P) an das Zubehör (E), nachdem das Übertragen der Firmwareaktualisierung an das Zubehör vollständig ist;
- Verifizieren, ob das zweite Entsperrgeheimnis mit dem ersten Entsperrgeheimnis des Zubehörs (E) korrespondiert; und
- Entpacken der Firmwareaktualisierung mittels eines Boot Loaders des Zubehörs (E) oder des Sicherheitsmoduls (16) in dem Fall, dass die Verifikation des zweiten Entsperrgeheimnisses positiv ist.

## Revendications

1. Procédé de mise à jour d'un micrologiciel d'un module de sécurité (16) dans un équipement (E) comprenant un dispositif (14) et le module de sécurité (16), lesquels sont agencés de telle sorte que les données peuvent être échangées entre le module de sécurité (16) et le dispositif (14), comprenant les étapes de :
- réception d'un premier message par le module de sécurité (16), dans lequel le premier message indique la disponibilité d'une mise à jour de micrologiciel fournie par un fournisseur (P), et dans lequel le premier message contient un numéro de transaction qui est individuel pour le module de sécurité (16) et un premier secret de déverrouillage ;
- transfert d'un second message de l'équipement (E) au fournisseur (P) avec lequel la mise à jour de micrologiciel est exigée du fournisseur (P), dans lequel le second message contient le numéro de transaction individuel afin de permettre au fournisseur (P) d'effectuer une identification du module de sécurité (16) ;
- transfert de la mise à jour de micrologiciel du fournisseur (P) à l'équipement (E) sur la base d'une évaluation du numéro de transaction individuel et stockage de la mise à jour de micrologiciel dans une mémoire du dispositif (14) ;
- au terme du transfert de la mise à jour de micrologiciel vers l'équipement, transfert d'un second secret de déverrouillage du fournisseur (P) à l'équipement (E) ;
- vérification de si le second secret de déverrouillage correspond au premier secret de déverrouillage par l'équipement (E), et
- décompactage de la mise à jour de micrologiciel par un programme d'amorçage de l'équipement (E) ou le module de sécurité (16), dans le cas où la vérification du second secret de déverrouillage est positive.

2. Procédé selon la revendication 1, dans lequel le décompactage de la mise à jour de micrologiciel comprend le transfert des données, qui sont traitées directement par le programme d'amorçage, du dispositif (14) au module de sécurité (16).

3. Procédé selon l'une quelconque des revendications précédentes, dans lequel le décompactage de la mise à jour de micrologiciel comprend un déchiffrement de données reçues du dispositif (14) par le module de sécurité (16).

4. Procédé selon l'une quelconque des revendications précédentes, dans lequel le programme d'amorçage crée une sauvegarde du micrologiciel même avant de lancer le décompactage de la mise à jour de micrologiciel.

5. Procédé selon l'une quelconque des revendications précédentes, dans lequel le programme d'amorçage vérifie la réussite de la mise à jour du micrologiciel en calculant une somme de contrôle de la mise à jour de micrologiciel décompactée et en comparant la somme de contrôle calculée avec une somme de contrôle reçue.

6. Procédé selon l'une quelconque des revendications précédentes, dans lequel le secret de déverrouillage est stocké dans le module de sécurité (16), uniquement dans le cas où une mise à jour de micrologiciel est nécessaire.

7. Procédé selon l'une quelconque des revendications précédentes, dans lequel le premier message est transféré par un gestionnaire d'abonnement du fournisseur (P) suite à la réception d'un message de version provenant d'un vendeur de module de sécurité (10) du fournisseur (P), dans lequel le message de version contient la mise à jour de micrologiciel et des informations concernant une version et/ou un type de mise à jour de micrologiciel disponible.

8. Procédé selon la revendication 7, dans lequel au moins la mise à jour de micrologiciel du message de version est chiffrée avec une première clé (Key_{FW}), dans lequel la première clé (Key_{FW}) est spécifique en fonction d'un type du module de sécurité (16) et connue du module de sécurité (16) de l'équipement (E) et du vendeur de module de sécurité (10).

9. Procédé selon la revendication 8, dans lequel le message de version contient une somme de contrôle chiffrée avec la première clé (Key_{FW}).

10. Procédé selon l'une quelconque des revendications précédentes, dans lequel le premier message est chiffré avec une seconde clé (Key_{eUICC}), connue du module de sécurité (16) de l'équipement (E) et du gestionnaire d'abonnement.

11. Procédé selon l'une quelconque des revendications précédentes, dans lequel le second message est déclenché par le module de sécurité (16), et le second message est transféré du dispositif (14) au fournisseur (P).

12. Procédé selon la revendication 10 ou 11, dans lequel le second message est chiffré avec la seconde clé (Key_{eUICC}).

13. Système de mise à jour de micrologiciel d'un module de sécurité (16) dans un équipement (E) comprenant un dispositif (14) et le module de sécurité (16), lesquels sont agencés de telle sorte que les données peuvent être échangées entre le module de sécurité (16) et le dispositif (14), le système étant apte pour :
- la réception d'un premier message par le module de sécurité (16), dans lequel le premier message indique la disponibilité d'une mise à jour de micrologiciel fournie par un fournisseur (P), et dans lequel le premier message contient un numéro de transaction qui est individuel pour le module de sécurité (16) et un premier secret de déverrouillage ;
- le transfert d'un second message de l'équipement (E) au fournisseur (P) avec lequel la mise à jour de micrologiciel est exigée à partir du fournisseur (P), dans lequel le second message contient le numéro de transaction individuel afin de permettre au fournisseur (P) d'effectuer une identification du module de sécurité (16) ;
- le transfert de la mise à jour de micrologiciel du fournisseur (P) à l'équipement (E) sur la base d'une évaluation du numéro de transaction individuel, et le stockage de la mise à jour de micrologiciel dans une mémoire du dispositif (14) ;
- au terme du transfert de la mise à jour de micrologiciel vers l'équipement, le transfert d'un second secret de déverrouillage du fournisseur (P) à l'équipement (E) ;
- la vérification de si le second secret de déverrouillage correspond au premier secret de déverrouillage, et
- le décompactage de la mise à jour de micrologiciel par un programme d'amorçage de l'équipement (E) ou le module de sécurité (16), dans le cas où la vérification du second secret de déverrouillage est positive.
